# EUROPEAN PATENT SPECIFICATION

(11) **EP 3 588 205 B1**
(45) Date of publication and mention of the grant of the patent: **30.12.2020**
(21) Application number: 17898128.8
(22) Date of filing: 01.08.2017
(51) Int. Cl.: G04G 21/00, G04G 15/00, G04G 19/12

(54) **LEARNING METHOD FOR PREVENTING TO TURN ON THE SCREEN OF A SMARTWATCH BY FALSE TOUCH OF A METAL HAND**
LERNMETHODE ZUR VERHINDERUNG DES EINSCHALTENS DES BILDSCHIRMS EINER SMARTUHR DURCH FALSCHE BERÜHRUNG EINES METALLZEIGERS
PROCÉDÉ D'APPRENTISSAGE POUR PRÉVENIR L'ALLUMAGE DE L'ÉCRAN D'UNE MONTRE INTELLIGENTE PAR LE FAUX CONTACT D'UNE AIGUILLE MÉTALLIQUE

(30) Priority: 21.02.2017 CN 201710093132
(43) Date of publication of application: 01.01.2020
(73) Proprietor: Guangdong Appscomm Co., Ltd., Guangzhou, Guangdong 510530 (CN)
(72) Inventor: XIANG, Fei, Guangzhou Guangdong 510530 (CN); LI, Bin, Guangzhou Guangdong 510530 (CN); LIN, Caican, Guangzhou Guangdong 510530 (CN); XIAO, Rui, Guangzhou Guangdong 510530 (CN); GU, Wei, Guangzhou Guangdong 510530 (CN); ZHOU, Xiaogao, Guangzhou Guangdong 510530 (CN); YANG, Guang, Guangzhou Guangdong 510530 (CN); QIAO, Lijun, Guangzhou Guangdong 510530 (CN)
(74) Representative: Petraz, Gilberto Luigi
(86) International application number: PCT/CN2017/095385
(87) International publication number: WO 2018/153024

(56) References cited:
- EP-A2- 2 851 756
- CN-A- 103 472 708
- CN-A- 103 793 075
- CN-A- 106 773 618
- CN-A- 106 873 354
- CN-U- 204 965 000
- JP-A- H0 933 669
- JP-A- 2000 131 469
- JP-A- 2000 131 469
- KR-A- 20160 030 832
- US-A1- 2015 241 852

## Description

### Field of the Invention

The present invention relates to a control method of a smartwatch, and in particular to a method to lighten the screen of a smartwatch in an unintended manner by a metal hand.

### Back ground of the Invention

The present smartwatches are generally controlled by keys, and there are also some smartwatches with a touch function. However, the surfaces of most smartwatches are made of glass, and the range of touch is very narrow. As a result, it is inconvenient for users to operate, thus bringing poor user experience. Due to direct purchase of some ICs with Floating Touch, and the limitations of the range of touch and watch hand, hands of the smartwatch can only include an hour hand and a minute hand. After a second hand is added, the touch feeling is not good enough and there is the phenomenon of touch failure. To solve the phenomenon of poor touch feeling and touch failure, the applicant rationally installed a touch FPC in the previous application through creative work. Even if a thick glass shell or other thick shell is used, touch control will not fail. Especially for two-hand or three-hand watches mostly applied at present, the installation of multiple hands on the hand shaft will inevitably increase thickness of smartwatches. The large-area touch FPC can well solve the technical problem of Floating Touch.

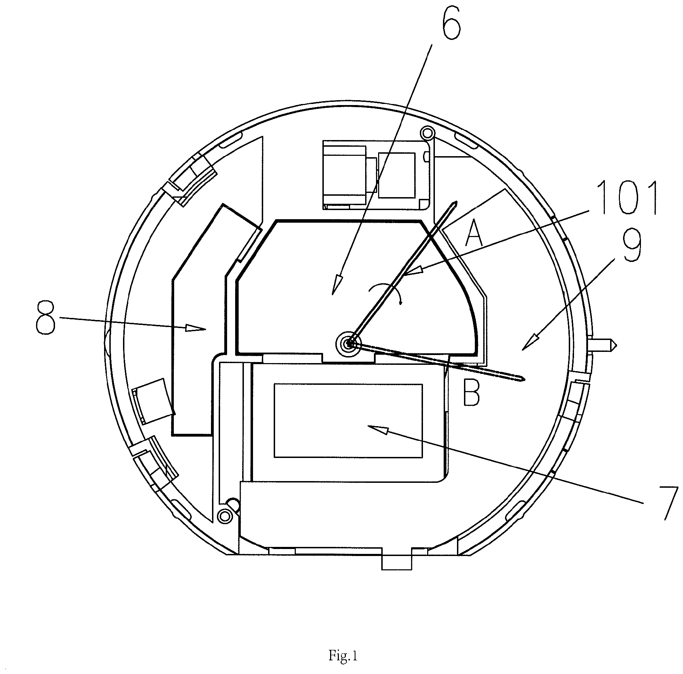

However, it is found through detection that, although the distance of Floating Touch increases greatly, some negative effects are also brought. As shown in Fig.1, 101 represents the metal hand of the smartwatch, and 9 represents a touch FPC after the area increases. The touch FPC considers the structure of installation parts, and the outer contour line of the part close to a movement cover plate 6 has stair turning with the outer contour line of the movement cover plate 6. Besides, the starting location at the clockwise direction of the touch FPC is of a right-angled shape. When the metal hand 101 rotates to the right angle location (A in the figure) of the starting point of the touch FPC, and the stair turning location (B in the figure) in Fig. 1, and the touch FPC induces the metal hand which can lead to the screen illumination, the screen will be lightened. The applicant described a manual record means in the above application CN2017100058434, but manual record may cause inaccurate time.

KR 2016-0030832 A discloses a smart watch comprising a mechanical movement and a touch screen.

### Summary of the Invention

For the above technical problem, the present invention provides as a solution the method defined in claim 1. A preferred embodiment of the present invention is defined in claim 2.
Accordingly, the following technical solution is proposed according to the structure of touch FPC:
According to the learning method for a smartwatch to prevent a metal hand from lightening a screen by an unintended touch, the smartwatch comprises a mainboard chip, a touch FPC (9), a display screen (7), and at least one metal hand (101), when the touch FPC (9) is triggered, the display screen (7) is lightened; a memory module is in the mainboard chip, and the memory module contains time sets T1, T2, ......, Tn, where n is an integer greater than 2;
the learning method comprises the following steps:
   Step I, in a first rotation period of each metal hand, the mainboard chip records a first time data generated by the metal hand (101) on a dial plate when the display screen is lightened, and puts the first time data into the time set T1;
   Step II, in a next rotation period after the first one, namely, a second rotation period, the mainboard chip records a second time data generated by the metal hand (101) on the dial plate when the display screen is lightened, and puts the second time data into the time set T2;
   Step III, Step II is repeated until in an n^{th} rotation period, the mainboard chip records an n^{th} time data generated by the metal hand (101) on the dial plate when the display screen is lightened, and puts the n^{th} time data into the time set Tn;
   Step IV, all the time data in the time sets T1, T2, ......, Tn are processed, if an appearance frequency of a time data Tm on the dial plate in all time sets T1, T2, ......, Tn is greater than or equal to a%n, wherein a ∈ (10-100], the mainboard chip learns that the time data Tm on the dial plate is a time when the display screen is triggered to be lightened; if the appearance frequency of the time data Tm in all time sets T1, T2, ......, Tn is less than a%n, the mainboard chip learns that the time data Tm on the dial plate is not the time when the display screen is triggered to be lightened.

The method to prevent a metal hand from lightening a screen by an unintended touch based on the learning method according to claim 1, comprising the following steps:
Step V, reserve the time data Tm on the dial plate learned by the mainboard chip which is the time when the display screen is triggered to be lightened, and delete the time data Tm on the dial plate learned by the mainboard chip which is not the time when the display screen is triggered to be lightened;
Step VI, the mainboard chip calculates a time tm when the screen is triggered to be lightened at a same location by at least one metal hand at a p^{th} time according to the time reserved in Step V and a property of the metal hand, the metal hand includes a second hand and a minute hand, the tm of the second hand is equal to Tm+60p, and the tm of the minute hand is equal to Tm+3600p, p is a natural number;
Step VII, the mainboard chip judges the current stage: at the reserved time data Tm and the time tm, if the display screen is in an ON state, the display screen will keep the ON state; if the display screen is in an OFF state, the display screen will keep the OFF state.

Through the above method, when the metal hand rotates to the right angle location of the starting point of the touch FPC, and the midway stair turning location in Fig.1, or other locations causing the touch FPC to be triggered, the touch FPC induces the metal hand which may cause the screen to be lightened, thus generating the phenomenon of unintended screen illumination.

### Brief Description of the Drawings

Fig.1 shows the structure diagram of the present smartwatch.

101- metal hand; 6 - movement cover plate; 7 - display screen; 8 - bluetooth antenna; 9 - touch FPC.

### Detailed Description of the Preferred Embodiments

Exemplary embodiments will now be described more fully with reference to the accompanying drawing. However, the exemplary embodiments can be implemented in multiple forms, and should not be construed as being only limited to that exemplary embodiments set forth herein. On the contrary, these exemplary embodiments are provided so that the present invention will be more comprehensive and complete, and the conception of exemplary embodiments will be fully conveyed to those skilled in the art. The figure is schematic only, and is not drawn to scale. The same drawing marks in the figure present the same or similar parts, so repetitive description thereof will be omitted.

Furthermore, the described features, structures, or features may be combined in one or more embodiments in any suitable manner within the scope of the appended claims.

In the following description, a plurality of specific details are provided to give a thorough understanding of embodiments of the present invention. The extension of the invention is not limited to said embodiments, but shall be determined by the appended claims.

As shown in Fig.1, the smartwatch consists of a mainboard chip, a touch FPC 9, a display screen 7 and at least one metal hand 101. When the touch FPC 9 is triggered, the mainboard chip controls the display screen to be lightened.

In practical operation, users can trigger the touch FCP 9 through floating touch of the glass screen of the smartwatch, thus lightening the screen. But when the metal hand is rotating, because the FPC has a turning point location, the touch FPC can be easily triggered, as shown at A and B in Fig.1. Although the turning point location may exist, these turning points are not necessarily the turning points which will trigger the touch FPC when the metal hand is rotating. Therefore, it is necessary to automatically find out the points which cause the screen to be lightened by unintended touch through experimental verification and mainboard chip learning.

Firstly, the mainboard chip learns the points which may cause the screen to be lightened by unintended touch, that is, find out the points cause the screen to be lightened by unintended touch. A is in the mainboard chip, and the memory module contains time sets T1, T2, ......, Tn, where n is an integer greater than 2.

For example, the metal hand is a second hand. In the first rotation period, namely 60s, the moments of the second hand on the dial plate causing the screen to be lightened are 13s, 20s, 25s, and 33s. The four moments are saved in the time set T1.

In the second rotation period, the moments of the second hand on the dial plate causing the screen to be lightened are 13s and 33s. The two moments are saved in the time set T2.

In the third rotation period, the moments of the second hand on the dial plate causing the screen to be lightened are 13s, 20s, and 33s. The three moments are saved in the time set T3.

In the fourth rotation period, the moments of the second hand on the dial plate causing the screen to be lightened are 13s and 20s. The two moments are saved in the time set T4.

In the fifth rotation period, the moments of the second hand on the dial plate causing the screen to be lightened are 13s and 20s. The two moments are saved in the time set T5.

All time data in the time sets T1, T2, ......, Tn are processed. If the appearance frequency of the time Tm on a dial plate in all time sets T1, T2, ......, Tn is greater than or equal to a%n, wherein a∈(10-100], the time Tm on the dial plate learned by the mainboard chip is the time when the display screen is triggered to be lightened. If the appearance frequency of the time Tm in the time sets T1, T2, ......, Tn is less than a%n, the time Tm on the dial plate learned by the mainboard chip is not the time when the display screen is triggered to be lightened.

When a=60 and n=5, the judgment threshold is 3. The appearance frequency of 13s is 5. The appearance frequency of 20s is 4. The appearance frequency of 25s is 1. The appearance frequency of 33s is 3. Hence, 13s, 20s, and 33s are the moments learned by the mainboard chip when the display screen is triggered to be lightened, while 25s is not the time when the display screen is triggered to be lightened.

The mainboard chip judges the present state: at the reserved time Tm (13s, 20s, and 33s) and the time tm (tm= Tm+60p, p is a natural number), Tm and tm are the time when all second hands pass 13s, 20s, and 33s on the dial plate. If the display screen is in an on state, the display screen will keep the ON state. If the display screen is in an OFF state, the display screen will keep the OFF state.

The metal hand includes a second hand and a minute hand, tm of the second hand is equal to Tm+60p (s), and tm of the minute hand is equal to Tm+3600p.

Through the above method, when the metal hand rotates to the right angle location of the starting point of the touch FPC, and the midway stair turning location in Fig.1, or other locations causing the touch FPC to be triggered, the touch FPC induces the metal hand which may cause the screen to be lightened, thus generating the phenomenon of unintended screen illumination.

Finally, it should be noted that the above embodiments are only used to explain the technical solution of the present invention and shall not be construed as the limitation thereof. Although the present invention is described in detail with reference to the embodiments, the extension of the present invention shall be determined by the appended claims.

## Claims

1. A learning method for a smartwatch to prevent a metal hand from lightening a screen by an unintended touch, wherein the smartwatch comprises a mainboard chip, a touch FPC (9), a display screen (7), and at least one metal hand (101), when the touch FPC (9) is triggered, the display screen (7) is lightened; a memory module is in the mainboard chip, and the memory module contains time sets T1, T2, ......, Tn, where n is an integer greater than 2;
the learning method comprises the following steps:
Step I, in a first rotation period of each metal hand, the mainboard chip records a first time data generated by the metal hand (101) on a dial plate when the display screen is lightened, and puts the first time data into the time set T1;
Step II, in a next rotation period after the first one, namely, a second rotation period, the mainboard chip records a second time data generated by the metal hand (101) on the dial plate when the display screen is lightened, and puts the second time data into the time set T2;
Step III, Step II is repeated until in an n^{th} rotation period, the mainboard chip records an n^{th} time data generated by the metal hand (101) on the dial plate when the display screen is lightened, and puts the n^{th} time data into the time set Tn;
Step IV, all the time data in the time sets T1, T2, ......, Tn are processed, if an appearance frequency of a time data Tm on the dial plate in all time sets T1, T2, ......, Tn is greater than or equal to a%n,
wherein a∈(10-100], the mainboard chip learns that the time data Tm on the dial plate is a time when the display screen is triggered to be lightened; if the appearance frequency of the time data Tm in all time sets T1, T2, ......, Tn is less than a%n, the mainboard chip learns that the time data Tm on the dial plate is not the time when the display screen is triggered to be lightened.

2. The learning method according to claim 1, further comprising the following steps:
Step V, reserve the time data Tm on the dial plate learned by the mainboard chip which is the time when the display screen is triggered to be lightened, and delete the time data Tm on the dial plate learned by the mainboard chip which is not the time when the display screen is triggered to be lightened;
Step VI, the mainboard chip calculates a time tm when the screen is triggered to be lightened at a same location by at least one metal hand at a p^{th} time according to the time reserved in Step V and a property of the metal hand, the metal hand includes a second hand and a minute hand, the tm of the second hand is equal to Tm+60p, and the tm of the minute hand is equal to Tm+3600p, p is a natural number;
Step VII, the mainboard chip judges the current stage: at the reserved time data Tm and the time tm, if the display screen is in an ON state, the display screen will keep the ON state; if the display screen is in an OFF state, the display screen will keep the OFF state.

## Patentansprüche

1. Lernmethode für eine Smartwatch zur Verhinderung des Erhellens eines Bildschirms seitens einen Metallzeigers wegen einer unabsichtlichen Berührung, worin die Smartwatch einen Hauptplatine-Chip, einen Touch-FPC (9), einen Anzeigebildschirm (7) und zumindest einen Metallzeiger (101) umfasst, worin, wenn der Touch-FPC (9) ausgelöst ist, der Anzeigebildschirm (7) erhellt ist; ein Speichermodul sich im Hauptplatine-Chip befindet und das Speichermodul Zeitsätze T1, T2, ....., Tn enthält, worin n eine Ganzzahl größer als 2 ist;
wobei die Lernmethode die folgenden Schritte umfasst:
Schritt I, in einer ersten Rotationszeit jedes Metallzeigers zeichnet der Hauptplatine-Chip erste Zeitdaten auf, die von dem Metallzeiger (101) auf einem Zifferblatt erzeugt werden, wenn der Anzeigebildschirm erhellt ist, und gibt die ersten Zeitdaten in den Zeitsatz T1 ein;
Schritt II, in einer nächstfolgenden Rotationszeit nach der ersten, nämlich einer zweiten Rotationszeit, zeichnet der Hauptplatine-Chip zweite Zeitdaten auf, die von dem Metallzeiger (101) auf dem Zifferblatt erzeugt werden, wenn der Anzeigebildschirm erhellt ist, und gibt die zweiten Zeitdaten in den Zeitsatz T2 ein;
Schritt III, Schritt II wird wiederholt, bis in einer n-ten Rotationszeit der Hauptplatine-Chip n-te Zeitdaten aufzeichnet, die von dem Metallzeiger (101) auf dem Zifferblatt erzeugt werden, wenn der Anzeigebildschirm erhellt ist, und die n-ten Zeitdaten in den Zeitsatz Tn eingibt;
Schritt IV, alle Zeitdaten in den Zeitsätzen T1, T2, ....., Tn werden verarbeitet, wenn eine Erscheinungsfrequenz von Zeitdaten Tm auf dem Zifferblatt in allen Zeitsätzen T1, T2, ....., Tn größer oder gleich a%n ist,
worin a ∈ (10-100], lernt der Hauptplatine-Chip, dass die Zeitdaten Tm auf dem Zifferblatt eine Zeit sind, wenn der Anzeigebildschirm ausgelöst wird, um erhellt zu werden; wenn die Erscheinungsfrequenz der Zeitdaten Tm in allen Zeitsätzen T1, T2, ....., Tn kleiner als a%n ist, lernt der Hauptplatine-Chip, dass die Zeitdaten Tm auf dem Zifferblatt nicht die Zeit sind, wenn der Anzeigebildschirm ausgelöst wird, um erhellt zu werden.

2. Lernmethode nach Anspruch 1, ferner umfassend die folgenden Schritte:
Schritt V, Reservieren der Zeitdaten Tm auf dem Zifferblatt, die von dem Hauptplatine-Chip gelernt werden, die die Zeit sind, wenn der Anzeigebildschirm ausgelöst wird, um erhellt zu werden, und Löschen der Zeitdaten Tm auf dem Zifferblatt, die von dem Hauptplatine-Chip gelernt werden, die nicht die Zeit sind, wenn der Anzeigebildschirm ausgelöst wird, um erhellt zu werden;
Schritt VI, der Hauptplatine-Chip berechnet eine Zeit tm, wenn der Bildschirm ausgelöst wird, um an einer gleichen Stelle durch zumindest einen Metallzeiger an einer p-ten Zeit erhellt zu werden, gemäß der Zeit, die im Schritt V reserviert wird, und einer Eigenschaft des Metallzeigers, der Metallzeiger umfasst einen Sekundenzeiger und einen Minutenzeiger, tm des Sekundenzeigers beträgt Tm+60p, und tm des Minutenzeigers beträgt Tm+3600p, p ist eine natürliche Zahl;
Schritt VII, der Hauptplatine-Chip beurteilt die aktuelle Stufe: an den reservierten Zeitdaten Tm und der Zeit tm, wenn der Anzeigebildschirm sich in einem EIN-Zustand befindet, wird der Anzeigebildschirm den EIN-Zustand behalten; wenn der Anzeigebildschirm sich in einem AUS-Zustand befindet, wird der Anzeigebildschirm den AUS-Zustand behalten.

## Revendications

1. Procédé d'apprentissage pour une montre connectée pour empêcher une aiguille métallique d'éclairer un écran par un toucher involontaire, où la montre connectée comprend une puce de carte mère, un FPC tactile (9), un écran d'affichage (7), et au moins une aiguille métallique (101), lorsque le FPC tactile (9) est déclenché, l'écran d'affichage (7) est éclairé ; un module de mémoire est dans la puce de carte mère, et le module de mémoire contient des ensembles temporels T1, T2, ......, Tn, où n est un entier supérieur à 2 ;
le procédé d'apprentissage comprend les étapes suivantes :
Étape I, dans une première période de rotation de chaque aiguille métallique, la puce de carte mère enregistre une première donnée temporelle générée par l'aiguille métallique (101) sur une plaque de cadran lorsque l'écran d'affichage est éclairé, et met la première donnée temporelle dans l'ensemble temporel Tl ;
Étape II, dans une période de rotation suivante après la première, à savoir une seconde période de rotation, la puce de carte mère enregistre une seconde donnée temporelle générée par l'aiguille métallique (101) sur la plaque de cadran lorsque l'écran d'affichage est éclairé, et met la seconde donnée temporelle dans l'ensemble temporel T2 ;
Étape III, l'étape II est répétée jusqu'à ce que dans une n^{ième} période de rotation, la puce de carte mère enregistre une n^{ième} donnée temporelle générée par l'aiguille métallique (101) sur la plaque de cadran lorsque l'écran d'affichage est éclairé, et met la n^{ième} donnée temporelle dans l'ensemble temporel Tn ;
Étape IV, toutes les données temporelles dans les ensembles temporels T1, T2, ......, Tn sont traitées, si une fréquence d'apparition d'une donnée temporelle Tm sur la plaque de cadran dans tous les ensembles temporels T1, T2, ......, Tn est supérieure ou égale à un%n, où un ∈ (10-100], la puce de carte mère apprend que les données temporelles Tm sur la plaque de cadran est un moment où l'écran d'affichage est déclenché pour être éclairé ; si la fréquence d'apparition des données temporelles Tm dans tous les ensembles temporels T1, T2, ......, Tn est inférieure à un%n, la puce de carte mère apprend que les données temporelles Tm sur la plaque de cadran ne sont pas le moment où l'écran d'affichage est déclenché pour être éclairé.

2. Procédé d'apprentissage selon la revendication 1, comprenant en outre les étapes suivantes :
Étape V, réserver les données temporelles Tm sur la plaque de cadran apprises par la puce de carte mère qui est le moment où l'écran d'affichage est déclenché pour être éclairé, et supprimer les données temporelles Tm sur la plaque de cadran apprises par la puce de carte mère qui ne sont pas le moment où l'écran d'affichage est déclenché pour être éclairé ;
Étape VI, la puce de carte mère calcule un temps tm où l'écran est déclenché pour être éclairé à un même endroit par au moins une aiguille métallique à un p^{ième} temps selon le temps réservé à l'étape V et une propriété de l'aiguille métallique, l'aiguille métallique comprend une aiguille des secondes et une aiguille des minutes, le tm de l'aiguille des secondes est égal à Tm+60p, et le tm de l'aiguille des minutes est égal à Tm+3600p, p est un nombre naturel ;
Étape VII, la puce de carte mère juge l'étage courant : aux données temporelles réservées Tm et au temps tm, si l'écran d'affichage est dans un état ON, l'écran d'affichage gardera l'état ON ; si l'écran d'affichage est dans un état OFF, l'écran d'affichage gardera l'état OFF.
